# EUROPÄISCHE PATENTSCHRIFT

(11) **EP 0 554 785 B1**
(45) Veröffentlichungstag und Bekanntmachung des Hinweises auf die Patenterteilung: **25.10.1995**
(21) Anmeldenummer: 93101249.6
(22) Anmeldetag: 28.01.1993
(51) Int. Cl.: B29B 17/02

(54) **Verfahren zur Wiederverwertung verbrauchter Magnetbandkassetten**
Method for recycling used magnetic tape cassettes
Procédé pour la récupération des cassettes à bande magnétique

(30) Priorität: 07.02.1992 DE 4203458
(43) Veröffentlichungstag der Anmeldung: 11.08.1993
(73) Patentinhaber: BASF Magnetics GmbH, 68165 Mannheim (DE)
(72) Erfinder: Mueller, Norbert, Dr., W-6701 Friedelsheim (DE); Eberhard, Joachim, W-7634 Kippenheim (DE); Eicher, Jochen, Dr., W-6730 Neustadt (DE); Hainisch, Norbert, W-7608 Willstaett (DE); Schulze, Axel-Ruediger, Dr., W-7600 Offenburg (DE); Sartor, Karl-Heinz, W-7607 Neuried (DE)
(74) Vertreter: Karau, Wolfgang, Dr.

(56) Entgegenhaltungen:
- WO-A-91/18388
- DE-A- 2 811 581
- GB-A- 2 130 124
- US-A- 4 765 050

## Beschreibung

Die Erfindung betrifft ein verfahren zum Wiederverwerten von verbrauchten Magnetbandkassetten.

Die WO-A-91/18388 beschreibt - ausgehend von einer bis zu 37 Teilen enthaltenden Standard-Video-Kassette, die nur kostenaufwendig herstellbar und montierbar ist und die als verbrauchte Kassette nur nach Demontieren schwierig wieder verwertbar und deren Material schwierig zu recyceln ist - eine Video-Kassette, deren Gehäuse und Einzelteile nur aus wenigen Teilen und aus Materialien besteht, welche ohne Demontieren der Kassette mit anderen Kunststoffen recyclingfähig sind. Einzelteile dieser bekannten Video-Kassette, wie Federn und Lagerteile, bestehen dabei aus geeigneten Kunststoffen zum gemeinsamen Recycling. Das Magnetband soll vor dem Zerstören dieser bekannten Videokassette daraus und von den Bandspulen entfernt werden, was nur äußerst aufwendig zu bewerkstelligen ist.

Aus der US-A-4,765,050 ist das Entfernen von Verbindungsmitteln wie Nieten und Schrauben, die zwischen den Gehäusehälften von Video-Kassetten vorgesehen sind, bekannt, wobei dies zum Zwecke der Reparatur oder Wartung der Video-Kassetten erfolgt, weitere Maßnahmen, insbesondere für eine Wiederverwertung verbrauchter Kassetten sind darin nicht beschrieben oder nahegelegt.

Mit der DE-A-2,811,581 ist das Öffnen einer Einwegkassette für Fotokopiergeräte zum Zwecke der Entnahme eines verbrauchten und Einsetzen eines neuen Reinigungsbandes bekannt, wobei die Niet-Schweißverbindungen der Kassette mittels rotierender Werkzeuge oder Druck und/oder Wärme geöffnet werden sollen. Damit ist die Wiederverwendbarkeit von Reinigungsband-Behältern beschrieben im Gegensatz zur vorliegenden Erfindung, die die Einzelteile von Video-Magnetband-Kassetten wiederverwertbar bzw. recycelbar machen will.

Bekannt sind ferner Verfahren zur Wiederverwertung von Magnetbandabfällen. Hierzu ist beispielsweise in der DE-OS 33 41 608 vorgeschlagen, Magnetbandabfälle in kleine Stücke zu zerschneiden, diese mit wäßriger alkalischer Lösung zu behandeln und durch schnelles Rühren in Stücke aus Substratband und Magnetpulver zu trennen. Eine Wiederverwertung von Magnetbändern im Zusammenhang mit Bandkassetten einschließlich der Verwertung der übrigen Kassettenteile ist bisher nicht bekannt.

Vorliegender Erfindung liegt die Aufgabe zugrunde, ein Verfahren zu entwickeln, durch das Magnetbandkassetten, die nicht mehr brauchbar sind, bis hin zum Magnetpigment, komplett wiederverwertet werden können, wobei eine Auftrennung in möglichst einheitliche Werkstoffe oder Stoffgruppen anzustreben ist.

Die Lösung der Aufgabe besteht in einem Verfahren gemäß Patentanspruch 1.

Dadurch wird ein sehr vorteilhaftes Verfahren zum Wiederverwerten verbrauchter Magnetbandkassetten bereitgestellt bis hin zum Verbrennen eines Granulatmaterials, das das Magnetmaterial enthält, welches durch thermisches Aufschließen und Rückführen in den Kreislauf seiner Herstellung, bei Chromdioxid als Magnetmaterial, in die Chromproduktion, gelangt.

In einer sehr zweckmäßigen Ausführung kann das Öffnen des Kassettengehäuses durch Ausstanzen um den Umfang der Bandspulen oder Bandwickel erfolgen und diese können anschließend vom Kassettengehäuse getrennt werden.

Es ist vorteilhaft aber auch möglich, daß das Öffnen des Kassettengehäuses durch Zersägen des flachliegenden Kassettengehäuses und der Bandspulen bzw. Bandwickel erfolgt und das Magnetband anschließend vom Kassettengehäuse getrennt wird.

Weitere Einzelheiten des vorstehend angegebenen Verfahrens sind anhand eines Ausführungsbeispiels nachfolgend beschrieben.

Eine weitere optimale Aufbereitung der wiederzuverwertenden Audio- oder Videokassetten ist die Umkehr der Montageschritte, indem die jeweilige Kassette auf einer Montageeinrichtung gehalten wird, die Gehäuseschrauben gelöst oder durch Aufbohren oder Ausstanzen entzernt werden, die obere Gehäusehälfte abgenommen und alle Einzelteile einzeln entnommen und einer Wiederverwertung zugeführt werden, wobei Bandspule und Wickelkern durch Ausbohren oder Ausstanzen voneinander getrennt werden. Für die Durchführung der einzelnen Verfahrensschritte können die für die Montage eingesetzten, automatisch arbeitenden Mechaniken verwendet werden, ergänzt durch gesteuerte Bohr- bzw. Stanzgeräte.

Eine einfachere Aufbereitungsmethode besteht darin, daß das Kassettengehäuse um die Bandspulen ausgestanzt oder ausgefräst und de Wickelkerne ebenfalls ausgefräst oder ausgestanzt werden. Danach werden die übrigen Kassettenteile und die Spulenflansche der Kunststoffwiederverwertung, d.h. einer Aufmahlung, einer magnetischen Abtrennung der Metallteile und einem Enschmelzen zugeführt. Das lose oder aufgewickelte Magnetband wird für die weiterverarbeitung nach einem Verfahren wie beispielsweise eingangs geschildert, konditioniert. Bei einem weiteren Verfahren wird das Bandmaterial mit einem an die Bandform (Spulen, loses Band, Scheiben, Folienstücke, Folien etc.) angepaßten Zufuhrsystem einer ein- bzw. mehrstufigen Zerkleinerung unterworfen. Das zerkleinerte und gerichtete Material wird dann in einer bzw. mehreren Stufen verdichtet. Danach wird das Produkt durch Reib- und Scherkräfte bis in den Schmelzbereich belastet und plastifiziert. Das Ansintern und Schmelzen des Materials kann durch Zuführung thermischer Energie unterstützt werden. Plastifiziertes Material wird durch Rollen und Kneten agglomeriert, geschmolzenes Material wird dann durch geeignete Lochplatten in Strängen extrudiert. Nach dem Abkühlen kann das Produkt auf die gewünschte Granulatgröße zerkleinert werden. Abtrennungen und Rückführungen in den einzelnen Verfahrensstufen gewährleisten ein einheitliches, staubarmes Granulat.

Die Größe der Granulate wird jeweils so gewählt, daß das Produkt ohne weitere Vorbehandlung mit den Erzen eines Hochofenprozesses gemischt bzw. direkt in die Öfen der Chromproduktion eingeschleust werden kann. Bei diesem Prozeß werden die organischen Anteile (Folie und Lacke) verbrannt und ersetzen damit einen Teil des erforderlichen Brennstoffes (thermische Verwertung). Die anorganischen Anteile (Chromdioxid-Pigment) werden dabei direkt aufgeschlossen (stoffliche Verwertung) und somit in den Chromkreislauf zurückgeführt.

Eine sehr einfache Methode zur Aufbereitung einer Magnetbandkassette ist das Zersägen des Kassettengehäuses. Die Kassette wird hierzu flachliegend der Länge nach in der Mitte getrennt; das Kassettengehäuse zerfällt dabei in zwei Teile und die Spulen einschließlich Magnetband sind jeweils halbiert. Das Magnetband, durch Zersägen schon zerkleinert, wird anschließend von den Gehäuseteilen getrennt.

## Patentansprüche

1. Verfahren zum Wiederverwerten verbrauchter Magnetbandkassetten, bestehend aus einem Kunststoff-Gehäuse, enthaltend Spulen oder Wickelkerne aus Kunststoff mit darauf aufgewickeltem Magnetband, gebildet aus einer mit Magnetpulver beschichteten Kunststoff-Folie, sowie Kunststoff- und Metalleinzelteilen im Inneren des Gehäuses, wobei die Kunststoff-Teile von den Metallteilen und das Magnetband von den Spulen getrennt und einer Wiederverwertung unterzogen werden durch die folgenden Verfahrensschritte: Mechanisches Öffnen des Gehäuses zumindest im Bereich der Spulen oder Bandwickel; Trennen der Kunststoff-Teile von den Metallteilen; Trennen der Spulen bzw. Wickelkerne vom aufgewickelten Magnetband; Zerkleinern des Magnetbandes oder des Bandwickels und Verdichten des zerkleinerten Materials; Plastifizieren des zerkleinerten Materials durch mechanische Kräfte und thermische Energie; Extrudieren des plastifizierten Materials in Strangform; Granulieren des Strangform-Materials; Verbrennen des Granulat-Materials im Verbrennungsofen zur Erzeugung von thermischer Energie und gleichzeitiges Aufschließen des Magnetpulvers und Rückführen des aufgeschlossenen Magnetpulvers in den Herstellungskreislauf des Magnetmaterials.

2. Verfahren nach Anspruch 1, wobei das Öffnen des Kassettengehäuses durch Ausstanzen um den Umfang der Bandspulen bzw. Bandwickel erfolgt und diese anschließend vom Kassettengehäuse getrennt werden.

3. Verfahren nach Anspruch 1, wobei das Öffnen des Kassettengehäuses durch Zersagen des flachliegenden Kassettengehäuses und der Bandspulen bzw. Bandwickel erfolgt und das Magnetband anschließend vom Kassettengehäuse getrennt wird.

## Claims

1. A method of recycling used magnetic tape cassettes, comprising a plastic housing, containing reels or hubs of plastic with, wound up on then, magnetic tape formed from polymer film coated with magnetic powder, and also individual plastic and metal parts in the interior of the housing, the plastic parts being separated from the metal parts and the magnetic tape being separated from the reels and subjected to recycling by the following method steps:
Mechanical opening of the housing, at least in the region of the reels or rolls of tape; separating of the plastic parts from the metal parts; separating of the reels or hubs from the wound-up magnetic tape; size-reducing of the magnetic tape or of the roll of tape and compacting of the size-reduced material; plasticating of the size-reduced material by mechanical forces and thermal energy; extruding of the plastic-coated material in strand form; granulating of the material in strand form; burning of the granular material in the combustion furnace for generating thermal energy and at the same time disintegrating of the magnetic powder and returning of the disintegrated magnetic powder into the magnetic material production cycle.

2. A method as claimed in claim 1, the opening of the cassette housing being performed by punching out around the circumference of the tape reels or rolls of tape and these subsequently being separated from the cassette housing.

3. A method as claimed in claim 1, the opening of the cassette housing being performed by sawing the flatlying cassette housing and the tape reels or rolls of tape and the magnetic tape subsequently being separated from the cassette housing.

## Revendications

1. Procédé pour récupérer des cassettes de bande magnétique utilisées, constituées d'un boîtier en matière plastique, contenant des bobines ou noyaux d'enroulement en matière plastique avec dessus une bande magnétique enroulée, formée d'une feuille de matière plastique recouverte de poudre magnétique, ainsi que des pièces détachées en métal et matière plastique à l'intérieur du boîtier, les pièces en matière plastique étant séparées des pièces en métal et la bande magnétique séparée des bobines, et étant soumises à une récupération par les étapes de procédé suivants :
ouverture mécanique du boîtier, au moins dans la zone des bobines ou enroulement de bande ; séparation des pièces en matière plastique des pièces en métal ; séparation des bobines ou noyaux d'enroulement de la bande magnétique enroulée ; fragmentation de la bande magnétique ou de l'enroulement de bande et compression du matériau fragmenté ; plastification du matériau fragmenté par des forces mécaniques et énergie thermique ; extrusion du matériau plastifié sous forme de cordon ; granulation du matériau en forme de cordon ; combustion du matériau granulé dans un four de combustion pour l'obtention d'énergie thermique et désagrégation simultanée de la poudre magnétique et reprise de la poudre magnétique désagrégée dans le circuit de préparation du matériau magnétique.

2. Procédé selon la revendication 1 dans lequel l'ouverture du boîtier de cassettes d'opère par découpage autour de la périphérie des bobines de bande ou enroulement de bande et ceux-ci sont ensuite séparés du boîtier de cassettes.

3. Procédé selon la revendication 1 dans lequel l'ouverture du boîtier de cassettes s'opère par sciage du boîtier de cassettes mis à plat et des bobines de bande ou enroulement de bande et la bande magnétique est ensuite séparée du boîtier de cassettes.
